# EUROPEAN PATENT APPLICATION

(11) **EP 3 981 529 A1**
(43) Date of publication of application: **13.04.2022**
(21) Application number: 20200716.7
(22) Date of filing: 08.10.2020
(51) Int. Cl.: B23B 51/06

(54) **DRILL POINT**

(71) Applicant: WALTER AG, 72072 Tübingen (DE)
(72) Inventor: ZHANG, Lijing, 720 72 TÜBINGEN (DE)
(74) Representative: Sandvik

(57) **Abstract**

The present invention relates to a drill point for machining of light alloys, such as aluminium alloys, comprises a body, which body has a front end with an apex area (13), a central axis of rotation (8) extending rearward from a centre of the apex area (13), and at least one cutting structure (10). Each cutting structure (10) comprises a primary rake surface (17), a primary clearance surface (18), a cutting edge (11) at an intersection between the primary rake surface (17) and the primary clearance surface (18), and a peripheral cutting corner (14). The cutting edge (11) extends radially outward from the apex area (13) to the cutting corner (14). The primary clearance surface (18), as seen in a front end view, has a breadth (b) that is a distance extending perpendicular to and from the cutting edge (11) to a primary clearance surface edge (19), which is rotationally trailing the cutting edge (11). The body further has a nominal cutting radius (22), which is a radial distance outward from the central axis of rotation(8) to the cutting corner (14), and which is at least 1mm. The cutting edge (11) has a central portion (32), which extends radially outward from the apex area (13) to a radially outer end (23). The radially outer end (23) of the cutting edge central portion (32) has a radial distance to the central axis of rotation (8) of at least 10% of the nominal cutting radius (22). The primary clearance surface breadth (b) along the cutting edge central portion (32) is at least 0,05mm and at most 5% of the nominal cutting radius (22).

## Description

### Technical field

The present invention relates to a drill point for machining of light alloys, such as aluminium alloys.

### Background

Drills for machining of light alloys, such as aluminium alloys, are known. A known drill comprises a drill point, which is a generally cone shaped front end of the drill, a shank at the rear end of the drill for mounting the drill to a machine spindle, and a straight or tapered segment therebetween. The drill point typically comprises two cutting edges, which are formed by the intersection of rake and clearance surfaces, and extend radially outward from a central position adjacent to a central axis of rotation. A chisel edge connects the two cutting edges across the central axis of rotation. Chip flutes are provided in the straight or tapered segment for conducting chips away from the cutting edges.

When drilling in work pieces of light alloys, such as aluminium alloys, it is a problem with such known drills that their centring properties tend to deteriorate, which reduces the ability to machine according to strict tolerances.

### Summary

It is an object of the present invention to mitigate the shortcomings of the prior art and to provide a drill point with improved centring properties.

This object is achieved according to the invention with the features of claim 1.

An inventive drill point for machining of light alloys, such as aluminium alloys, comprises a body, which body has a front end with an apex area, a central axis of rotation extending rearward from a centre of the apex area, and at least one cutting structure. Each cutting structure comprises a primary rake surface, a primary clearance surface, a cutting edge at an intersection between the primary rake surface and the primary clearance surface, and a peripheral cutting corner. The cutting edge extends radially outward from the apex area to the cutting corner. The primary clearance surface, as seen in a front end view, has a breadth that is a distance extending perpendicular to and from the cutting edge to a primary clearance surface edge, which is rotationally trailing the cutting edge. The body further has a nominal cutting radius, which is a radial distance outward from the central axis of rotation to the cutting corner, and which is at least 1mm. The cutting edge has a central portion, which extends radially outward from the apex area to a radially outer end. The radially outer end of the cutting edge central portion has a radial distance to the central axis of rotation of at least 10% of the nominal cutting radius. The primary clearance surface breadth along the cutting edge central portion is at least 0,05mm and at most 5% of the nominal cutting radius.

During operation, the drill point is rotated around the central axis of rotation, wherein a cutting speed in the direction of rotation will vary from zero in the centre to a high speed at an outer, peripheral end of the cutting edge. Thereby, chips are cut from the machined material along a peripheral portion of the cutting edge, while the machined material mainly plastically deforms in a central portion. Thus, no clean chips are formed at the centre of the drill.

In prior art drills, when machining light alloys, such as aluminium alloys, material from the machined work piece tend to get stuck to the drill at the centre where no proper chips are formed. Such build-up of material occurs especially at the clearance surface behind the cutting edge close to the centre of the drill. It has been found that this is a significant cause for the deteriorating centring properties of the drill.

Thanks to the inventive drill point having a very narrow clearance surface close to the centre, the risk that material sticks to the clearance surface there is reduced. If any material nevertheless does get stuck, it is prone to break off from such a narrow surface. Thus, material is less likely to build up on the clearance surface, whereby the centring properties of the drill point are improved and work pieces can be machined according to strict tolerances.

The drill point according to the present invention is suitable for machining, such as drilling of holes, of work pieces belonging to the work piece material group ISO-N according to the standard of ISO classification of work piece material. This group contains non-ferrous metals, for example light alloys, such as aluminium based alloys.

The drill point is for example made from one or more of cemented carbide, ceramics, cubic boron nitride, polycrystalline diamond, and/or cermet. Optionally, the drill point is coated with a surface coating comprising for example titanium nitride, titanium carbonitride, diamond-like carbon (DLC) and/or aluminium oxide.

The drill point is configured to rotate around the central axis of rotation in a cutting direction during machining of a work peace. As seen in this direction of rotation, features of the drill point are leading or trailing relative each other.

The cutting edge of each cutting structure of the drill body is formed at the intersection between the primary rake surface and the primary clearance surface. Optionally, the cutting edge extends from the central axis of rotation or from a position close thereto.

Preferably, the cutting edge has an edge radius of at most 6µm, and more preferably at most 4µm. Such sharp edge radiuses are advantageous for cutting work pieces of the intended light alloy material. Optionally, the cutting edge radius is constant in a cross-section of the cutting edge, i.e. formed by a circular segment, or, varies forming an asymmetric edge. Optionally the cutting edge radius is constant or varies along the cutting edge. The edge radius may for example be measured using an optical 3D measurement device.

The cutting edge has an outer end at the cutting corner, which is located at the periphery of the body. The nominal cutting radius of the drill point is to be understood as a radius from the central axis of rotation to the cutting corner. The drill point has a nominal cutting radius of at least 1mm. Drill points with smaller nominal cutting radius inherently have smaller breadths of the primary clearance surface so that they are less prone to machined material sticking thereto.

Preferably, the nominal cutting radius of the drill point is at most 20mm. Generally, larger drill points are less suitable for machining light alloys, such as aluminium alloys, with state of the art processes and machines.

The apex area of the body of the drill point is to be understood as a small area around the central axis of rotation at the foremost tip of the drill point. For example, in an embodiment where the cutting edge has a central end close to the central axis of rotation, a small area centrally of the central end of the cutting edge; or, in an embodiment having a chisel edge, an area limited by a circle having the total length of the chisel edge as diameter.

In each cutting structure, the primary rake surface is a surface portion closest to the cutting edge against which material removed from a work piece initially slides. According to an embodiment, each cutting section comprises a chip flute, wherein the primary rake surface is a portion of a chip flute surface that is closest to the cutting edge. Thus, additional rake surfaces may follow axially rearward of the primary rake surface.

In each cutting structure, the primary clearance surface is a forwardly facing surface that is directly rotationally trailing the cutting edge. As seen in a front end view, or in other words, in a view in the direction of the central axis of rotation toward the front end, the primary clearance surface has a breadth from the cutting edge to a rotationally trailing primary clearance surface edge. Optionally, the primary clearance surface is curved or plane, wherein the primary clearance surface may be angled relative to a plane with the central axis of rotation as normal. For example, a true breadth following the curvature of a curved primary clearance surface may deviate from the breadth as seen in the front end view.

The primary clearance surface breadth along the cutting edge central portion is at least 0,05mm and at most 5% of the nominal cutting radius. With a smaller breadth the drill point becomes weak and may break when during operation subjected to cutting forces. With a larger breadth, material form the intended work pieces of light alloys, such as aluminium, increasingly starts to stick to the clearance surface.

Optionally, the breadth of the primary clearance surface along the cutting edge central portion is constant or varies within the defined limits. For example, the breadth is constant over a major portion, is narrower closest to the central axis of rotation, and broadens continuously along an outer portion to align with a broader primary clearance surface at an outer portion of the cutting edge.

Preferably, when the nominal cutting radius is larger than 2mm, the primary clearance surface breadth along the cutting edge central portion is at most 3% of the nominal cutting radius. Thereby, drill points with such larger nominal cutting radiuses have a primary clearance surface with a breadth at the cutting edge central portion that is a smaller fraction of the nominal cutting radius. Due to the larger nominal cutting radius, also a smaller fraction, which is advantageous with respect to sticking, will be strong enough during operation.

Preferably, when the nominal cutting radius is larger than 5mm, the primary clearance surface breadth along the cutting edge central portion is at least 1% of the nominal cutting radius. Thereby, drill points with such larger radiuses advantageously are stronger while at the same time the breadth of the primary clearance surface at the cutting edge central portion still is small enough to sufficiently prevent sticking of material from work pieces of the intended material during operation.

Preferably, the primary clearance surface breadth is 10 - 30% of the nominal cutting radius along an outer portion of the cutting edge, which extends form the cutting corner and radially inward to at most the outer end of the cutting edge central portion. Since the cutting speed at the cutting edge of the drill point is higher in radially outer portions, proper chips are cut from the machined material in that area such that sticking of the material to primary clearance surface is less of a concern. Therefore, advantageously the breadth of the primary clearance surface at the radially outer portion of the cutting edge is optimized with respect to cutting performance and strength instead. A breadth of at least 10% of the nominal cutting radius achieves an increased strength that can be desired for certain operations. A breadth of at most 30% of the nominal cutting radius ensures smooth operation.

The cutting edge central portion extends radially outward from the apex area, or in other words, from an radially inner end at or close to the central axis of rotation. The radially outer end of the cutting edge central portion is located in a position that has a radial distance of at least 10% of the nominal cutting radius to the central axis of rotation. This is the area where during operation the cutting speed is lowest and the tendency of machined material sticking to the primary clearance surface is largest. Preferably, the radially outer end of the cutting edge central portion has a radial distance to the central axis of rotation of at least 35% of the nominal cutting radius.

According to an embodiment, the cutting edge comprises a main cutting edge extending radially inward from the cutting corner, and a secondary cutting edge extending radially outward from the apex area to an inner end of the main cutting edge. As seen in a front end view, the main cutting edge extends with an angle to the secondary cutting edge, and the cutting edge central portion forms the secondary cutting edge. For example, in order to provide a more positive cutting geometry, the main cutting edge is designed to have an extension inward from the cutting corner toward a position beside the central axis of rotation, and the secondary cutting edge is designed to connect the main cutting edge with the apex area. For example, the secondary cutting edge extends mainly over a web of the drill point body. Such embodiments are advantageous in that the main cutting edge and the primary clearance surface thereof can be optimized for chip removing machining, while the central part of the cutting edge, i.e. the secondary cutting edge is given the properties of the inventive cutting edge central portion in order to minimize sticking.

According to an embodiment having such a main cutting edge and a cutting edge central portion in form of a secondary cutting edge, which are angled relative each other, the main cutting edge comprises a main transition edge closest to the secondary cutting edge. Thereby advantageously a sharp corner in the cutting edge can be avoided.

Preferably, each cutting structure further comprises a forwardly facing front end surface. The front end surface extends radially outward from the apex area to the periphery of the body, and connects to and is rotationally trailing the primary clearance surface edge. Optionally, the front end surface includes secondary or more clearance surfaces, which in sequence follow rotationally behind the primary clearance surface. According to an embodiment, at least a radially outer portion of the primary clearance surface edge is straight as seen in a front end view.

According to an embodiment, the front end surface comprises a recess delimited by a recess surface, wherein the recess surface borders the primary clearance surface edge at least along the cutting edge central portion. Thus, along the cutting edge central portion, the recess surface extends from the primary clearance surface edge and axially rearward therefrom. The recess is rotationally trailing behind the primary clearance surface edge. Providing a recess in the front end surface is an efficient way to obtain the desired narrow breadth of the primary clearance surface at the cutting edge central portion. The recess can for example be provided by grinding.

According to an embodiment, each cutting structure further comprises a coolant channel having a coolant opening, which is at least partly located in the recess surface. Thereby coolant and/or lubricant provided through the coolant channel advantageously can reach the cutting edge central portion by flowing over the recess. In addition to providing coolant and/or lubricant to the cutting edge central portion, the fluid flow contributes to achieving that less material from the work piece sticks to the primary clearance surface. Preferably, at least a major portion of a radially inner and axially forward quarter of a perimeter of the coolant opening borders the recess surface, or in other words, interrupts the recess surface.

Preferably, the recess is a concave surface. A concave surface is efficient to produce, for example by using a grinding wheel. According to an embodiment, the recess surface comprises a curved bottom surface extending axially rearward, a radially inner curved part surface extending from the bottom surface to the apex area, and a radially outer curved part surface extending from the bottom surface to the coolant opening. Preferably, as seen in a front end view, a longitudinal extension of the bottom surface is in parallel with the cutting edge central portion. Preferably, as seen in a side view, the bottom surface extends longitudinally in the direction of the central rotation axis to at least the axial position of the centre of the coolant channel opening.

Optionally, the body comprises two, three or more cutting structures, which are arranged with rotational symmetry around the central axis of rotation. However, also embodiments with only one cutting structure are perceivable.

According to a preferred embodiment, the body comprises two cutting structures, which are arranged with 180° rotational symmetry around the central axis of rotation. Optionally, the body comprises a chisel edge connecting the cutting edges of the two cutting structures across the apex area. According to an embodiment, each cutting edge is connected to the chisel edge via a minor transition edge. Thereby advantageously a sharp corner in the cutting edge can be avoided.

Preferably, the inventive drill point is incorporated in a drill head, which optionally is an integral part of a solid round tool or an exchangeable head connectable to a drill tool body. The drill point then constitutes a front end segment of a larger entity such as for example an exchangeable head or a solid tool, such as a drill.

According to an embodiment, a solid tool in form of a drill comprising the inventive drill point, further comprises a shank at a rear end for mounting the drill to a machine spindle, and a straight or tapered segment between the drill point and the shank. Chip flutes are provided in the straight or tapered segment that connect to the drill point such that chips can be conducted away from the cutting edges during operation. Optionally, the chip flutes are helical or straight.

### Brief description of the drawings

In the following, example embodiments will be described in greater detail and with reference to the accompanying drawings, in which:
Fig. 1 is a perspective front view of an embodiment of a drill point according to the present invention, wherein the drill point is comprised a in front portion of a solid drill tool;
Fig. 2 is a side view of the entire solid drill tool of Fig. 1;
Fig. 3 is a font end view of the drill tool with the drill point;
Fig. 4 is a perspective side view of a front portion of the solid drill tool with the drill point in a first angular position;
Fig. 5 and 6 are side views of the front portion of the solid drill tool with the drill point in two different angular positions;

All the figures are schematic, not necessarily to scale, and generally only show parts which are necessary in order to elucidate the respective embodiments, whereas other parts may be omitted or merely suggested. Unless otherwise indicated, like reference numerals refer to like parts in different figures.

### Detailed description

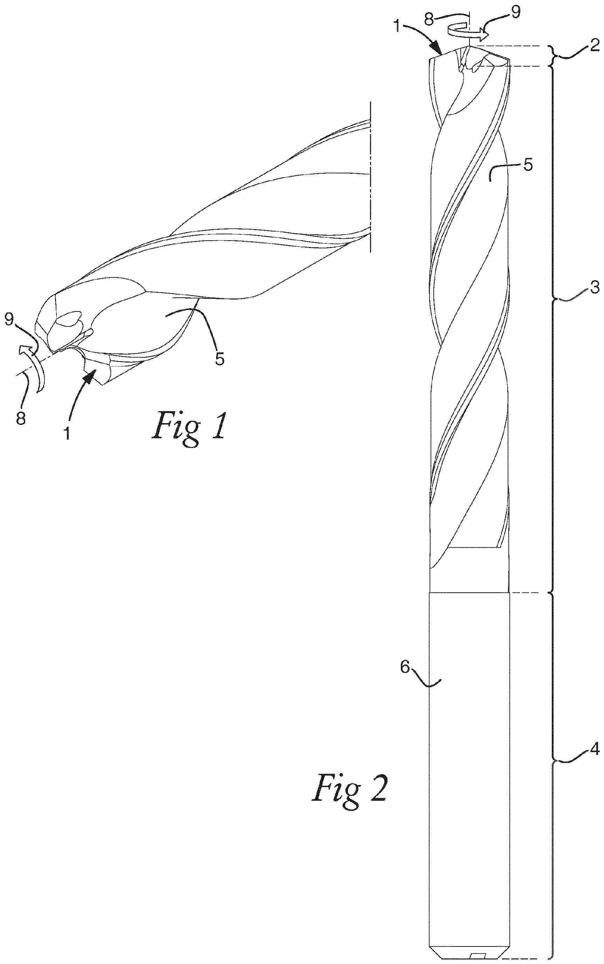

Figs. 1 and 2 show a solid drill tool in form of a twist drill comprising an embodiment of a drill point 1 according to the present invention. The drill point 1 according to the embodiment constitutes a generally cone shaped front segment 2 of the twist drill. The twist drill further comprises a shank 6 in a rear segment 4 for mounting the twist drill in a machine spindle. A straight segment 3 extends between the front segment 2 and the rear segment 4. Helical chip flutes 5 are arranged in the straight segment 3, which chip flutes 5 continue axially into the drill point 1. The twist drill is configured to rotate around a central axis of rotation 8 in a cutting direction 9 during machining of a work peace, such as for example drilling holes in aluminium alloy. Features of the drill point 1 and the twist drill are leading or trailing relative each other as seen in the cutting direction 9.

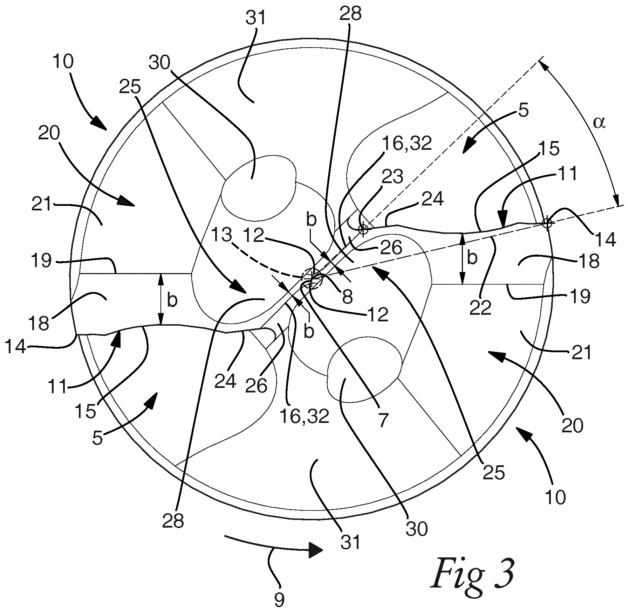

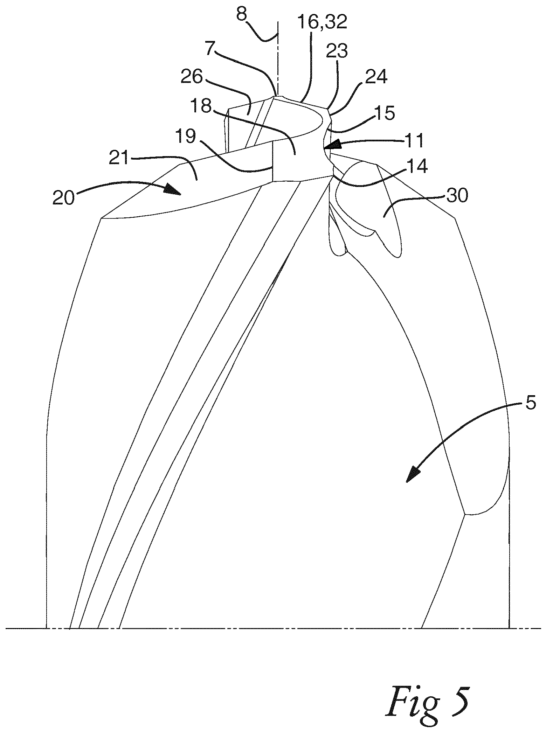

With reference to Figs. 3 - 6, the embodiment of the drill point 1 that is comprised in the twist drill will be described.

The drill point 1 comprises a body having a foremost tip in form of a chisel edge 7. The central axis of rotation 8 extends rearward in the body from the centre of the chisel edge 7.

The body further comprises two cutting structures 10 that are arranged with 180° rotational symmetry with respect to the central axis of rotation 8. Each cutting structure 10 comprises a cutting edge 11, wherein each cutting edges 11 is connected to a respective end of the chisel edge via a minor transition edge 12. A central area around the central axis of rotation 8, which central area comprises the chisel edge 7 and the minor transition edges 12, forms an apex area 13.

Each cutting edge 11 extends from a radially outer end of the minor transition edge 12 at the apex area 13 to a peripheral cutting corner 14. A radius from the central axis of rotation 8 to the cutting corner 14 forms a nominal cutting radius 22 of the drill point 1 and also of the example twist drill. The drill point of the embodiment has a nominal cutting radius of 5mm. As seen in a side view, each cutting edge 11 and minor transition edge 12 are substantially straight and form a point angle β of 140°. Other embodiments may have different cutting edeg geometries, for example cutting edges extending substantially in an axial plane.

Each cutting edge 11 is sharp with an edge radius of at most 4µm.

Each cutting edge 11 comprises a main cutting edge 15 extending radially inward from the cutting corner 14, and a central cutting edge portion (32) in form of a secondary cutting edge 16. The secondary cutting edge 16 extends radially outward from the minor transition edge 12 in the apex area and has a radially outer end 23 at a radially inner end of the main cutting edge 15. The main cutting edge 15 comprises a main transition edge 24 closest to the radially outer end 23 of the secondary cutting edge 16. A radial distance from the central axis of rotation 8 to the radially outer end 23 of the secondary cutting edge 16 is 2,07mm, i.e. at least 35% of the nominal cutting radius 22 , i.e. 1,75mm.

As seen in the front end view of Fig. 3, the main cutting edge 15 extends with an angle to the secondary cutting edge 16. An angle α between a line through the central axis of rotation 8 and the radially outer end of the secondary cutting edge 16, and a line along the nominal cutting radius 22 through the central axis of rotation 8 and the cutting corner 14 is 20-40°, and in the shown embodiment the angle α is 24°.

As seen in the front end view of Fig. 3, the secondary cutting edge 16 is substantially straight and the main cutting edge 15 is concave over a major portion, wherein the main transition edge 24 is straight. The minor transition edge 12 is concave. Other embodiments may have different cutting edge geometries.

Each cutting edge 11 is formed at the intersection of a primary rake surface 17 and a primary clearance surface 18. One of the chip flutes 5 extends rearward from each cutting edge 11. The primary rake surface 17 is a portion of a chip flute surface that is closest to the cutting edge 11.

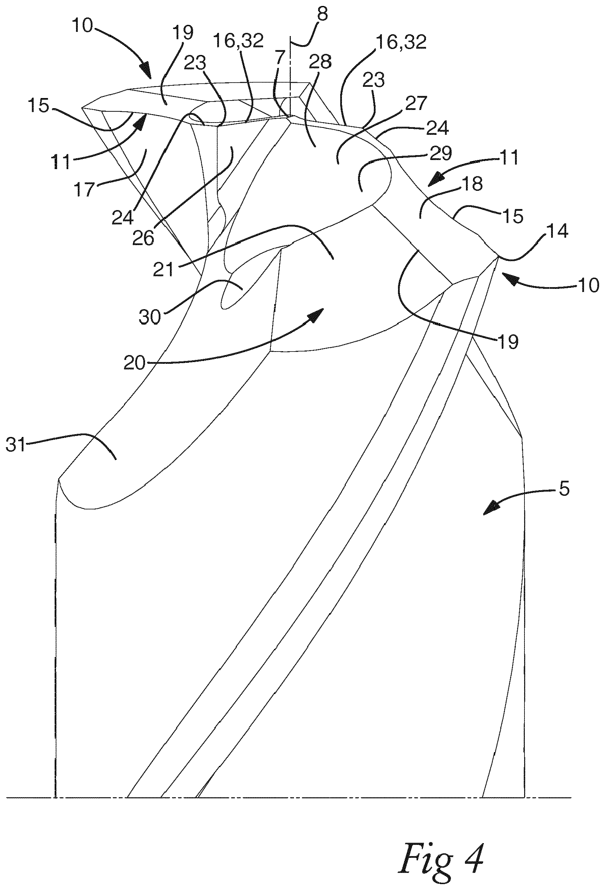

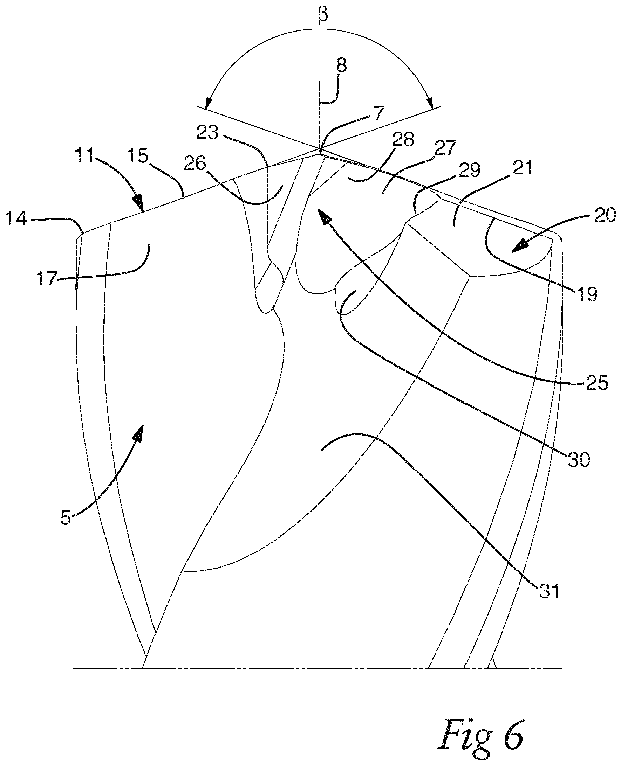

As best seen in Figs. 4 and 6, each secondary cutting edge 16 has a primary rake surface 17 in form of a thinning surface 26. Close to the central axis of rotation 8 at the chisel edge 7 and at the minor transition edge 12, the thinning surface 26 comprises a concave portion. Axially below a major, radially outer length of the secondary cutting edge 16 the thinning surface 26 comprises a planar portion.

In each cutting structure 10, the primary clearance surface 18 is a forwardly facing surface that is directly rotationally trailing the cutting edge 11.

Each cutting structure 10 further comprises a forwardly facing front end surface 20. The front end surface 20 extends radially outward from the apex area 13 to the periphery of the body, and connects to and is rotationally trailing the primary clearance surface 18. The primary clearance surface 18 has a trailing edge 19 at the transition to the front end surface 20. The front end surface 20 includes a secondary clearance surface 21, which follows rotationally behind the primary clearance surface 18. A rotationally trailing edge of the secondary clearance surface 21 connects to an axially forward and rotationally leading surface 31 of the chip flute 5. The axially forward and rotationally leading surface 31 and the primary rake surface 17 are part surfaces of the same chip flute 5, but are associated with a respective different one of the cutting structures 10. The front end surface 20 follows a portion of the periphery of the body.

As seen in the front end view of Fig. 3, the primary clearance surface 18 has a breadth (b), which measured perpendicular to the cutting edge 11. The breadth (b) is a distance from the cutting edge 11 to the primary clearance surface edge 19.

The breadth (b) of the primary clearance surface along the secondary cutting edge 16 is 0,06mm, i.e. more than 0,05mm and 1% of the nominal cutting radius 22 and less than 3% of the nominal cutting radius, i.e.0,15mm.

The breadth (b) of the primary clearance surface along an outer portion of the cutting edge 11 is 0,53mm, i.e. more than 10% and less than 30% of the nominal cutting radius 22, i.e. 1,5mm. Specifically, this larger breadth (b) is present along a major portion of the main cutting edge 15 radially inward from the cutting corner 14.

The breadth (b) of the primary clearance surface 18 is constant substantially along the secondary cutting edge 16, broadens continuously along the transition portion 24 of the main cutting edge 15, and varies slightly along the outer portion of the main cutting edge 15 due to the concave curvature thereof.

Each forwardly facing front end surface 20 comprises a recess 25 delimited by a recess surface, which borders the primary clearance surface 18 along the minor transition edge 12, along the secondary cutting edge 16, and along a radially central portion of the main cutting edge 15 including the main transition edge 24. Radially outward, the recess surface borders the secondary clearance surface 21 and the axially forward, rotationally leading surface 31 of the chip flute 5.

Due to the recess 25, the portion of the primary clearance surface 18 that has the inventive narrow breadth (b) is located on a ridge. The ridge has a rotationally leading flank in form of the thinning surface 26 functioning as rake surface 17, and a rotationally trailing flank in form of the recess surface.

The recess surface is a concave surface comprising a curved bottom surface 27 extending axially rearward, a radially inner curved part surface 28 extending from the bottom 27 surface to the apex area 13, and a radially outer curved part surface 29, c.f. Figs. 4 and 6.

As seen in the front end view of Fig. 3, the radially inner curved part surface 28 extends along the secondary cutting edge 16 of both cutting structures 10, and across the apex area 13. Specifically, the radially inner curved part surface 28 of the first cutting structure borders the thinning surface 26 of the second cutting structure, and the radially inner curved part surface 28 of the second cutting structure borders the thinning surface 26 of the first cutting structure. Due to the difference in concave curvature of the radially inner curved part surface 28 and the thinning surface 26, a common edge is formed at their intersection.

Each cutting structure 10 further comprises a coolant channel having a coolant opening 30. The coolant opening 30 is partly located in the recess surface, and partly in the rotationally leading surface 31 of the chip flute 5. Thus, the coolant opening 30 is located in the radially outer curved part surface 29 of the recess 25, wherein almost a radially inner and axially forward half of the perimeter of the coolant opening 30 is located in the recess surface.

As can best be seen in Figs. 4 - 6, thanks to the inventive recess 25, coolant exiting through the coolant opening 30 is guided toward the secondary cutting edge 16. In combination with the inventive narrow breadth of the primary clearance surface 18 along the secondary cutting edge 16, the risk of material sticking to the clearance surface 18 is considerably reduced.

## Claims

1. A drill point for machining of light alloys, such as aluminium alloys, comprising a body, which body has
- a front end with an apex area (13),
- a central axis of rotation (8) extending rearward from a centre of the apex area (13), and
- at least one cutting structure (10),
wherein each cutting structure comprises
- a primary rake surface (17),
- a primary clearance surface (18),
- a cutting edge (11) at an intersection between the primary rake surface (17) and the primary clearance surface (18), and
- a peripheral cutting corner (14),
wherein
- the cutting edge(11) extends radially outward from the apex area (13) to the cutting corner (14), and
- the primary clearance surface (18), as seen in a front end view, has a breadth (b) that is a distance extending perpendicular to and from the cutting edge (11) to a primary clearance surface edge (19), which is rotationally trailing the cutting edge (11),
wherein the body further has a nominal cutting radius (22), which is a radial distance outward from the central axis of rotation (8) to the cutting corner (14), and which is at least 1mm,
**characterized in that**
the cutting edge (11) has a central portion (32), which extends radially outward from the apex area (13) to a radially outer end (23), wherein
- the radially outer end (23) of the cutting edge central portion (32) has a radial distance to the central axis of rotation (8) of at least 10% of the nominal cutting radius (22), and wherein
- the primary clearance surface breadth (b) along the cutting edge central portion (32) is at least 0,05mm and at most 5% of the nominal cutting radius (22).

2. The drill point according to claim 1, wherein, when the nominal cutting radius (22) is larger than 2mm, the primary clearance surface breadth (b) along the cutting edge central portion (32) is at most 3% of the nominal cutting radius (22).

3. The drill point according to claim 1 or 2, wherein, when the nominal cutting radius (22) is larger than 5mm, the primary clearance surface breadth (b) along the cutting edge central portion (32) is at least 1% of the nominal cutting radius (22).

4. The drill point according to any claim 1 - 3, wherein the primary clearance surface breadth (b) is 10 - 30% of the nominal cutting radius (22) along an outer portion of the cutting edge (11), which extends form the cutting corner (14) and radially inward to at most the outer end (23) of the cutting edge central portion (32).

5. The drill point according to any claim 1 - 4, wherein the radially outer end (23) of the cutting edge central portion (32) has a radial distance to the central axis of rotation (8) of at least 35% of the nominal cutting radius (22).

6. The drill point according to any claim 1 - 5, wherein the cutting edge (11) comprises
- a main cutting edge (15) extending radially inward from the cutting corner (14), and
- a secondary cutting edge (16) extending radially outward from the apex area (13) to an inner end of the main cutting edge,
wherein,
- as seen in a front end view, the main cutting edge(15) extends with an angle to the secondary cutting edge, and
- cutting edge central portion (32) forms the secondary cutting edge (16).

7. The drill point according to any claim 6, wherein the main cutting edge (15) extends with an angle to the secondary cutting edge (16) such that, as seen in a front end view, an angle (α) between a line through the central axis of rotation (8) and the radially outer end (23) of the secondary cutting edge (16), and a line through the central axis of rotation (8) and the cutting corner (14) is 20-40°.

8. The drill point according to any claim 1 - 7, wherein the cutting edge (11) has an edge radius of at most 4µm.

9. The drill point according to any claim 1 - 8, wherein each cutting structure (10) further comprises a forwardly facing front end surface (20), which front end surface (20)
- extends radially outward from the apex area (13) to the periphery of the body, and
- connects to and is rotationally trailing the primary clearance surface edge (19),
wherein
- the front end surface (20) comprises a recess (25) delimited by a recess surface, and
- the recess surface borders the primary clearance surface edge (19) at least along the cutting edge central portion (32).

10. The drill point according to claim 9, wherein each cutting structure (10) further comprises a coolant channel having a coolant opening (30), which is at least partly located in the recess surface.

11. The drill point according to claim 10, wherein at least a major portion of a radially inner and axially upper quarter of a perimeter of the coolant opening (30) borders the recess surface.

12. The drill point according to claim 10 or 11, wherein the recess surface is a concave surface comprises
- a curved bottom surface (27) extending axially rearward,
- a radially inner curved part surface (28) extending from the bottom surface (27) to the apex area (13), and
- a radially outer curved part surface (29) extending from the bottom surface (27) to the coolant opening (30).

13. The drill point according to any claim 1 - 12, wherein the body comprises two cutting structures (10), which are arranged with 180° rotational symmetry around the central axis of rotation (8), and wherein the body comprises a chisel edge (7) connecting the cutting edges (11) of the two cutting structures (10) across the apex area (13).

14. The drill point according to claim 12 and 13, wherein
- a first thinning surface (26) extends from the chisel edge (7) axially rearward below the rake surface (17) of the cutting edge central portion (32) of a first of the two cutting structures (10),
- a second thinning surface (26) extends from the chisel edge (7) axially rearward below the rake surface (17) of the cutting edge central portion (32) of a second of the two cutting structures (10),
wherein
- the radially inner curved part surface (28) of the recess surface of the first cutting structure (10) borders the second thinning surface (26) via a common edge, and
- the radially inner curved part surface (28) of the recess surface of the second cutting structure (10) borders the first thinning surface (26) via common edge.

15. A solid drill tool comprising the drill point (1) according to any claim 1 - 14.
